# FASCICULE DE BREVET EUROPEEN

(11) **EP 2 076 073 B1**
(45) Date de publication et mention de la délivrance du brevet: **05.05.2010**
(21) Numéro de dépôt: 08291223.9
(22) Date de dépôt: 19.12.2008
(51) Int. Cl.: H04W 12/02

(54) **Procédé de masquage des identifiants de cellules ou des codes de zones de localisation d'un réseau mobile relativement à un terminal mobile**
Verfahren zur Maskierung von Kennungen von Zellen oder Codes von Lokalisierungszonen eines Mobilfunknetzes in Bezug auf ein mobiles Endgerät
Method for concealing cell identifiers or area codes for locating a mobile network in relation to a mobile terminal

(30) Priorité: 31.12.2007 FR 0709180
(43) Date de publication de la demande: 01.07.2009
(73) Titulaire: Société Française du Radiotéléphone-SFR, 75008 Paris (FR)
(72) Inventeur: Bensimon, Michaël, 38100 Grenoble (FR); Giraud-Sauveur, Christophe, 38330 Montbonnot Saint Martin (FR); Lebomin, Eric, 38330 Biviers (FR); Prunel, Nicolas, 38530 Barraux (FR)
(74) Mandataire: Debay, Yves

(56) Documents cités:
- WO-A-02/49380
- US-B1- 7 010 306
- US-B2- 7 106 690

## Description

La présente invention concerne le domaine des télécommunications, en particulier, la géolocalisation. L'invention propose un procédé de masquage des identifiants de cellules ou des codes de zones de localisation d'un réseau mobile relativement à un terminal mobile.

Régulièrement, de nouveaux services de télécommunication sont lancés afin de satisfaire les besoins potentiels des consommateurs. Un des derniers en date est la géolocalisation qui permet de fournir des informations en fonction de la position géographique de l'utilisateur. La géolocalisation peut avoir de nombreuses applications dans des domaines très éloignés. L'utilisateur peut utiliser la géolocalisation pour trouver un cinéma ou un restaurant le plus proche, avoir des informations touristiques sur le lieu qu'il visite. Les parents soucieux peuvent localiser leur enfant à tout moment. Les professionnels peuvent localiser leurs véhicules, suivre le personnel et les livraisons et détecter un éventuel problème. Pour les autorités, la géolocalisation peut être d'une grande aide pour avoir des informations sur les personnes victimes d'un kidnapping ou surveiller les déplacements de suspects.

Mais la géolocalisation peut donner lieu à de nombreux abus et nuire à la vie privée de l'utilisateur. En effet, le recours aux données de type identification de cellules radiofréquences, appelées également « cell ID », ou de type code de zone de localisation, appelées couramment LAC (Location Area Code) ou RAC (Routing Area Code), peut être utilisé pour localiser des utilisateurs à leur insu et ce sans que l'opérateur ne puisse intervenir à ce jour.

En effet, actuellement, les identifiants de cellules radiofréquences (cell ID) et/ou les codes de zones de localisation (LAC ou RAC) sont « statiques » sur toutes les cellules des contrôleurs de station de base BSC (Base Station Controller) ou des contrôleurs de réseau radiofréquence RNC (Radio network Controller) et en récupérant ces identifiants ou ces codes, il est possible de connaître la localisation de l'abonné ou utilisateur.

Pour répondre à des obligations légales de protéger la vie privée des utilisateurs ou abonnés, il est nécessaire de mettre en oeuvre des mécanismes permettant d'empêcher des acteurs externes de déployer des solutions de localisation reposant sur les identifiants de cellules radiofréquences ou sur les codes de zones de localisation.

Le document WO 02/49380 propose une solution pour assurer le masquage du numéro identifiant d'un utilisateur grâce à l'utilisation d'un alias qui remplace cet identifiant lors du traitement du signal de cet utilisateur. De même, notamment grâce au document US 7,106,690, des procédés faisant intervenir un codage, comme par exemple le code de Hadamard, sont connus dans le cadre d'attribution d'identifiants cellulaires. Toutefois, ces protocoles de masquage ne permettent pas une protection optimale de certaines des données privées permettant une localisation de l'utilisateur.

La présente invention a pour but de supprimer un ou plusieurs inconvénients de l'art antérieur et propose un procédé de masquage des identifiants de cellule ou des codes de zones de localisation d'un réseau mobile relativement à un terminal mobile permettant d'assurer la protection de la vie privée des utilisateurs dudit terminal mobile.

Pour atteindre ce but, le procédé de masquage des identifiants statiques de cellule ou des codes statiques de zone de localisation d'un réseau mobile est caractérisé en ce qu'il consiste à générer, vis-à-vis d'un terminal mobile, tout ou partie d'identifiants dynamiques de cellule ou de codes dynamiques de zone de localisation, au moyen d'un module de masquage intégré à un équipement appartenant à l'architecture du réseau considéré, à partir d'identifiants statiques de cellule ou de codes statiques de zone de localisation afin de rendre impossible ou peu fiable leur résolution en coordonnées géographiques par un quelconque acteur ou service externe autre que les services authentifiés par l'opérateur ; et
- soit à générer, au niveau du canal de signalisation, les identifiants statiques de cellule ou les codes statiques de zone de localisation à partir des identifiants dynamiques de cellule ou des codes dynamiques de zone de localisation, remontés à travers le réseau par le terminal mobile jusqu'au module de masquage, de façon, à assurer la translation de l'identifiant statique de cellule ou code statique de zone de localisation à destination des autres équipements du réseau considéré, au moyen dudit module de masquage,
- soit à mettre à jour, de façon globale ou partielle les autres équipements du réseau considéré et le système d'information de l'opérateur au moyen dudit module de masquage.

Selon une autre particularité, le procédé de masquage consiste à générer les identifiants statiques de cellule ou les codes statiques de zone de localisation, au moyen d'un module de génération inverse intégré dans un autre équipement du réseau considéré, proche de la plate-forme de l'opérateur ou de la plate-forme partenaire de services géolocalisés, à partir des identifiants dynamiques de cellule ou de codes dynamiques de zone de localisation, remontés à travers le réseau par le terminal mobile jusqu'au module de génération inverse, afin de permettre à des services authentifiés par l'opérateur d'accéder aux réponses du module de génération inverse permettant d'estimer la localisation du terminal mobile après résolution géographique.

Un autre but est atteint en proposant un dispositif de masquage d'identifiants statiques de cellule ou de codes statiques de zone de localisation permettant de mettre en oeuvre le procédé de masquage caractérisé en ce qu'il comprend :
- soit un module de masquage d'identifiants statiques de cellule ou de codes statiques de zone de localisation, intégré à un contrôleur BSC (Base Station Controller) dans le cas d'un réseau de type GSM ou GPRS ou à un contrôleur RNC (Radio Network Controller) dans le cas d'un réseau de type UMTS ;
- soit un autre module de masquage de tout ou partie des identifiants statiques de cellule ou des codes statiques de zone de localisation, intégré à un équipement du réseau considéré proche de la plate-forme de l'opérateur ou plate-forme partenaire de services géolocalisés.

Selon une autre particularité, le module de masquage est destiné à générer, vis-à-vis d'un terminal mobile, des identifiants dynamiques de cellule ou des codes dynamiques de zone de localisation à partir des identifiants statiques de cellule ou des codes statiques de zone de localisation et à transposer, au niveau du BSC ou du RNC du réseau considéré, les identifiants dynamiques de cellule ou les codes dynamiques de zone de localisation remontés par le terminal mobile à travers une BTS associée jusqu'au BSC ou RNC, vis-à-vis des autres équipements du réseau considéré, au niveau du canal de signalisation, en identifiants statiques de cellule ou codes statiques de zone de localisation.

Selon une autre particularité, le module de masquage comprend des moyens algorithmiques basés sur des mécanismes réversibles mettant en oeuvre un ou plusieurs secret(s) de façon à assurer la génération des identifiants dynamiques de cellule ou des codes dynamiques de zone de localisation et le transcodage entre les identifiants dynamiques de cellule ou les codes dynamiques de zone de localisation et les identifiants statiques de cellule ou les codes statiques de zone de localisation.

Selon une autre particularité, le module de masquage est associé à un module de génération inverse intégré à un centre d'exploitation et de maintenance OMC ou à un système d'information de l'opérateur ou déporté sur une plate-forme de l'opérateur ou une plate-forme partenaire de services géo localisés du réseau considéré pour générer les identifiants statiques de cellule ou les codes statiques de zone de localisation, au niveau du canal de données, à partir des identifiants dynamiques de cellule ou des codes dynamiques de zone de localisation, remontés à travers le réseau considéré par le terminal mobile jusqu'au module de génération inverse, pour autoriser leur résolution en coordonnées géographiques et localiser le terminal mobile.

Selon une autre particularité, le module de génération inverse comprend des moyens algorithmiques, similaires mais inverses aux moyens algorithmiques du module de masquage.

Selon une autre particularité, l'autre module de masquage est destiné à générer, vis-à-vis d'un terminal mobile et des autres équipements du réseau considéré et notamment la plate-forme de l'opérateur ou la plateforme partenaire de services géolocalisés, des identifiants dynamiques de cellule ou des codes dynamiques de zone de localisation à partir d'identifiants statiques de cellule et de codes statiques de zone de localisation propres au système d'information de l'opérateur de façon à ce que la résolution en coordonnées géographiques soit peu fiable voire impossible, cet autre module de masquage étant également destiné à mettre à jour, de façon globale ou partielle, lesdits autres équipements du réseau considéré et du système d'information de l'opérateur.

Selon une autre particularité, l'autre module de masquage comprend des moyens algorithmiques non prédictifs ou basés sur un mécanisme mettant en oeuvre un ou plusieurs secrets pour générer les identifiants dynamiques de cellule ou les codes dynamiques de zone de localisation.

Selon une autre particularité, le module de masquage est associé à un module de génération inverse destiné à générer des identifiants statiques de cellule ou des codes statiques de zone de localisation propres au système d'information de l'opérateur à partir d'identifiants dynamiques de cellule ou codes dynamiques de zone de localisation, remontés à travers le réseau par le terminal mobile jusqu'au module de génération inverse, pour assurer la synchronisation ou le calcul au vol entre les identifiants statiques de cellule ou codes statiques de zone de localisation propres au système d'information de l'opérateur.

Selon une autre particularité, le module de génération inverse comprend des moyens algorithmiques, similaires mais inverses aux moyens algorithmiques de l'autre module de masquage.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :
- la figure 1 représente le premier mode de réalisation du procédé de masquage des identifiants de cellule d'un réseau mobile de type GSM relativement à un terminal mobile ;
- la figure 2 illustre le deuxième mode de réalisation du procédé de masquage des identifiants de cellule d'un réseau mobile de type GSM relativement à d'autres équipements du réseau considéré.

La présente invention consiste à intégrer un module de masquage des identifiants de cellule (cell ID) ou des codes de zone de localisation (LAC ou RAC) dans un équipement appartenant à l'architecture d'un réseau mobile. L'invention est prévue pour s'adapter à différentes technologies de téléphonie cellulaire, notamment la technologie « GSM » (Groupe Spécial Mobile), la technologie « GPRS » (General Packet Radio Service) et la technologie « UMTS » (Universal Mobile Telecommunications System).

Nous allons rappeler, avant de commencer la description de la présente invention, l'architecture permettant la connexion d'un terminal mobile (1) au réseau selon les différentes technologies (GSM, GPRS, UMTS), ces différentes architectures étant connues.

En GSM, l'architecture se compose d'une BTS (Base Transceiver Station) (2) qui est en charge de la liaison radiofréquence avec le terminal mobile (1). La BTS (2) se compose, essentiellement, d'un élément interface avec une station la contrôlant appelée BSC (Base Station Controller) (3), d'un émetteur/récepteur et d'une antenne de façon à former, ce qu'on appelle, une cellule (10). La BTS (2) est apte à activer et désactiver un canal radiofréquence, chiffrer le contenu à transmettre, coder/décoder, moduler/démoduler un signal radiofréquence, contrôler la liaison radiofréquence, surveiller le niveau et la qualité de réception, contrôler la puissance d'émission.

Il est à noter qu'une zone de localisation est un ensemble de cellules (10).

Le BSC (Base Station Controller) (3) est apte à commander une ou plusieurs BTS (2) et est relié à un MSC (Mobile Switching Center) (4). Le BSC (3) décide de l'activation/désactivation d'un canal vers le terminal mobile (1), de la puissance d'émission des BTS (2) et des terminaux mobiles (1), gère les changements de cellules (10), encore appelés « handover », et concentre les flux de données en provenance des BTS (2).

Le MSC (Mobile Switching Center) (4) est chargé du routage dans le réseau, de l'interconnexion avec les autres réseaux et de la coordination des appels. Le MSC (4) est en charge de plusieurs BSC (3) et concentre les flux de données en provenance de ces BSC (3). En outre, chaque MSC (4) est associé à une base de données appelée VLR (Visitor Location Register) qui contient pour tous les abonnés présents dans le territoire desservi par le MSC (4), leur profil et la zone de localisation où ils se trouvent. Une autre base de données appelés HLR (Home Location Register) est relié au MSC (4) et contient les profils et les localisations grossières d'abonnés du réseau.

En GPRS, l'architecture se compose de la BTS (2) (Base Transceiver Station) qui est en charge de la liaison radiofréquence avec le terminal mobile (1), du BSC (3) qui est apte à commander une ou plusieurs BTS (1) et est relié à un SGSN (Serving GPRS Support Node) (5) qui est une passerelle qui permet l'acheminement des données dans les réseaux mobiles de type GPRS.

Le SGSN (5) gère l'interface avec le réseau de paquets externe via une autre passerelle, le GGSN (Gateway GPRS Support Node) (6) pour les appels sortants et vers le terminal mobile (1) pour les appels entrants. En outre, le SGSN (5) maintient les informations identifiant de l'abonné et les services utilisés et contrôle la localisation du terminal mobile (1).

En UMTS, un RNC (Radio Network Controller) (7) est destiné à contrôler les BTS (2), appelées Node-B (2) en UMTS. Le RNC (7) est apte à gérer la répartition de la ressource radio, le chiffrement des données avant l'envoi au terminal mobile (1), ainsi qu'une partie de la localisation des abonnés ou utilisateurs. Le RNC (7) est relié au SGSN (5), lui-même relié au GGSN (6).

Ces réseaux (GSM, GPRS, UMTS) utilisent des canaux pour transmettre une information binaire ou analogique, chaque canal correspondant à une fréquence spécifique à laquelle l'onde électromagnétique est modulée. On distingue les canaux de données et les canaux de signalisation, par exemple et de manière non limitative, le BCCH (Broadcast Control Channel) qui permet la diffusion de données caractéristiques d'une cellule (10).

Un centre d'exploitation et de maintenance (OMC/S Operation and Maintenance Center/Switch ou OMC/R Operation and Maintenance Center/Radio) (8) est relié aux BTS (2), dans le cas d'exploitation d'une technologie de type « GSM » ou « GPRS », ou aux RNC (7), dans le cas d'exploitation d'une technologie de type « UMTS ». Ce centre d'exploitation et de maintenance (OMC) (8) est un centre informatique destiné à superviser localement les équipements du réseau. Par exemple, certains OMC (8) vont superviser des ensembles de BSC (3) ou RNC (7) et de BTS (2) sur différentes zones de localisation et d'autres OMC (8) vont superviser les MSC (4) et les VLR.

Ce centre d'exploitation et de maintenance (OMC) (8) est relié au système d'information de l'opérateur (9) permettant de stocker, de structurer et de communiquer des informations sous forme de texte, images, sons, ou de données codées. Le système d'information de l'opérateur (9) est relié à une plate-forme de l'opérateur ou une plate-forme de partenaire de services géolocalisés (10).

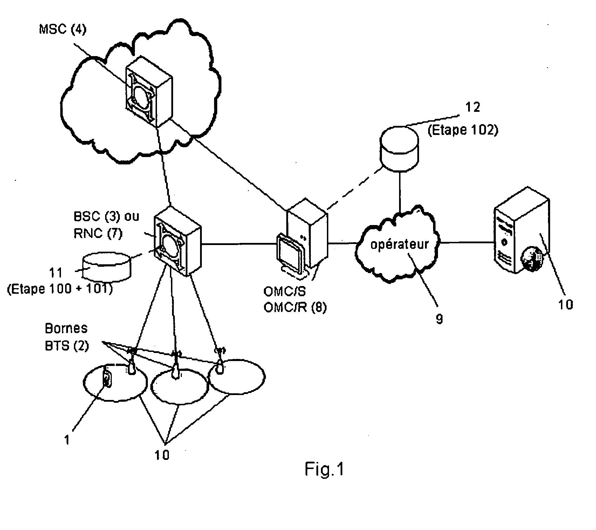

Dans un premier mode de réalisation représenté à la figure 1, un module de masquage (11) d'identifiants de cellule radiofréquence (cell Id) ou de codes de zone de localisation (LAC ou RAC) est intégré au BSC (3) en GSM et GPRS et au RNC (7) en UMTS. Ce module de masquage (11) est destiné, d'une part, à générer (100) des identifiants dynamiques de cellule (cell ID_ d) ou des codes dynamiques de zone de localisation (LAC_d ou RAC_d), c'est-à-dire variables dans le temps, vis-à-vis de terminaux mobiles (1), à partir d'identifiants statiques de cellule (cell ID) ou de codes statiques de zone de localisation (LAC ou RAC) afin de rendre impossible leur résolution en coordonnées géographiques par un quelconque acteur ou service externe autre que les services authentifiés par l'opérateur. D'autre part, le module de masquage (11) est destiné à transposer (101), au niveau du BSC (3) ou du RNC (7) du réseau considéré, les identifiants dynamiques de cellule (cell ID_d) ou les codes dynamiques de zone de localisation (LAC_d ou RAC_d)) remontés par le terminal mobile (1) à travers l'air vers une BTS (2) associée au BSC (3) ou RNC (7) puis à travers des liaisons par fil ou câbles vers les autres équipements du réseau considéré, au niveau du canal de signalisation, en identifiants statiques de cellule (cell ID) ou codes statiques de zone de localisation (LAC ou RAC) de façon à assurer la translation de l'identifiant de cellule statique (cell ID) ou code de zone de localisation statique (LAC ou RAC) à destination des autres équipements du réseau considéré, tels que le MSC (4), le HLR, etc.. Ce transcodage (100, 101) entre les identifiants dynamiques de cellule (cell ID_d) ou les codes dynamiques de zone de localisation (LAC_d ou RAC_d) et les identifiants statiques de cellule (cell ID) ou les codes statiques de zone de localisation (LAC ou RAC) est réalisé par des moyens algorithmiques inclus dans le module de masquage (11). Ainsi, seuls les identifiants dynamiques de cellule (cell ID_d) ou les codes dynamiques de zone de localisation (LAC_d ou RAC_d) peuvent être écoutés à travers l'air (OTA : Over the Air).

Ces moyens algorithmiques sont conformes à l'état de l'art et basés sur des mécanismes réversibles mettant en oeuvre un ou plusieurs secret(s) qui sont connus par les équipements du réseau authentifiés par l'opérateur.

Dans un exemple de réalisation relatif au premier mode de réalisation, les identifiants dynamiques de cellule radiofréquence (cell ID_d) ou les codes dynamiques de zone de localisation (LAC_d ou RAC_d) sont générés (100) quotidiennement par le module de masquage (11). Cette génération quotidienne (100) peut être fonction de la date, d'un compteur numérique, encore appelé timestamp (horodatage), servant de référence temporelle, dans cet exemple, le jour, et représentant le nombre de secondes écoulées depuis un instant de référence et/ou d'un incrément connu et/ou d'une clé secrète.

De façon avantageuse, le BSC (3) ou le RNC (7), agissent comme un proxy, c'est-à-dire un serveur informatique qui a pour fonction de relayer les requêtes entre le terminal mobile (1), les BTS (2) et les autres équipements du réseau considéré.

Selon l'invention, une cellule (10) ou une zone de localisation dispose respectivement de deux identifiants de cellule ou de deux codes de zone de localisation vis-à-vis du BSC (3) ou du RNC (7). Un premier identifiant de cellule (cell ID) ou code de zone de localisation (LAC ou RAC) est unique et statique pour le réseau d'infrastructure (Core network) et un second identifiant de cellule (cell ID_d) ou code de zone de localisation (LAC_d ou RAC_d) est dynamique pour le dialogue avec le terminal mobile (1).

En outre, un module de génération inverse (12) associé au module de masquage (11) peut être intégré à l'OMC (8) ou au système d'information de l'opérateur (9) ou encore, déporté sur la plate-forme de l'opérateur ou la plate-forme partenaire de services géolocalisés (10) du réseau considéré. Ce module de génération inverse (12) est destiné à générer (102) les identifiants statiques de cellule (cell ID) ou les codes statiques de zone de localisation (LAC ou RAC), au niveau du canal de données, à partir des identifiants dynamiques de cellule (cell ID_d) ou des codes dynamiques de zone de localisation (LAC_d ou RAC_d), remontés à travers le réseau considéré par le terminal mobile (1), pour autoriser leur résolution en coordonnées géographiques.

De façon avantageuse, lorsque l'OMC (8) ou le système d'information de l'opérateur (9) ou encore la plate-forme de l'opérateur ou la plate-forme de services géolocalisés authentifiés par l'opérateur (10) du réseau considéré a résolu, de manière géographique, les identifiants statiques de cellule (cell ID) ou les codes statiques de zone de localisation (LAC ou RAC) en fonction de la topologie du réseau « GSM » ou « GPRS » ou encore « UMTS », il est possible pour l'opérateur de connaître la position approximative du terminal mobile (1) et par conséquent, de localiser l'utilisateur ou l'abonné. Des moyens algorithmiques, similaires mais inverses aux moyens algorithmiques du module de masquage (11) et conformes à l'état de l'art, sont également prévus au sein de ce module de génération inverse (12).

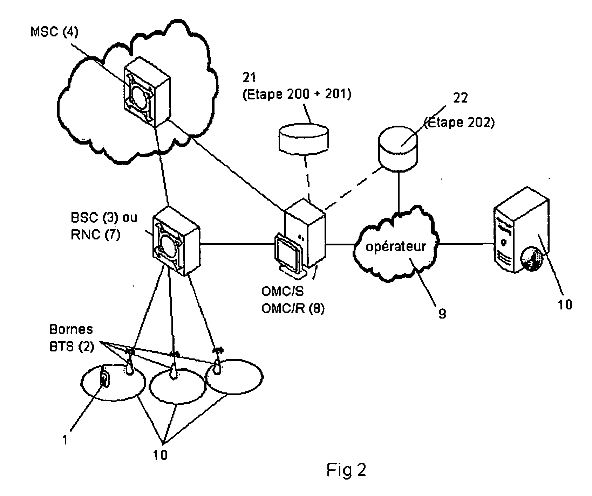

Dans un deuxième mode de réalisation représenté à la figure 2, un autre module de masquage (21) de tout ou partie des identifiants de cellule radiofréquence (cell Id) ou des codes de zone de localisation (LAC ou RAC) est intégré à un équipement appartenant à l'architecture du réseau considéré et proche de la plate-forme de l'opérateur ou de la plate-forme partenaire de services géolocalisés (10). Dans l'exemple représenté, cet autre module de masquage (21) est inclus à l'OMC (8). Cet autre module de masquage (21) comprend des moyens algorithmiques, éventuellement non prédictifs ou basés sur un mécanisme conforme à l'état de l'art mettant en oeuvre un ou plusieurs secrets de façon à générer (200), vis-à-vis du terminal mobile (1) et des autres équipements du réseau considéré (MSC (4), BSC (3), HLR, VLR etc.) et notamment la plate-forme de l'opérateur ou la plateforme partenaire de services géolocalisés (10), des identifiants dynamiques de cellule radiofréquence (cell ID_d) ou des codes dynamiques de zone de localisation (LAC_d ou RAC_d) à partir d'identifiants statiques de cellule (cell ID) ou de codes statiques de zone de localisation (LAC ou RAC) propres au système d'information de l'opérateur (9) de façon à ce que la résolution en coordonnées géographiques soit peu fiable, voire impossible.

En outre, cet autre module de masquage (21), dans l'exemple représenté, intégré au niveau de l'OMC (8), est également destiné à mettre à jour (201), de façon globale ou partielle, les autres équipements du réseau considéré (MSC (4), BSC (3), HLR, VLR etc.) et du système d'information de l'opérateur (9).

Il est à noter qu'il est nécessaire de modifier, de façon synchrone, tous les équipements réseaux intégrant les informations d'identifiants de cellules radiofréquences (cell ID) ou de codes de zones de localisation (LAC ou RAC). Pour ce faire, un module similaire à l'autre module de masquage (21) est intégré, par exemple et de manière non limitative, dans chaque OMC.

En outre, si le système d'information de l'opérateur (9) ou un équipement du réseau le nécessite, un module de génération inverse (22) des identifiants statiques de cellule (cell ID) ou des codes statiques de zone de localisation (LAC ou RAC) propres au système d'information de l'opérateur (9) à partir des identifiants dynamiques de cellule (cell ID_d) ou des codes dynamiques de zone de localisation (LAC_d ou RAC_d) est intégré dans le système d'information de l'opérateur (9) de façon à assurer la synchronisation ou le calcul au vol entre les identifiants statiques de cellule (cell ID) ou codes statiques de zone de localisation (LAC ou RAC) propres au système d'information de l'opérateur (9). Des moyens algorithmiques, similaires mais inverses aux moyens algorithmiques de l'autre module de masquage (21) et conformes à l'état de l'art, sont également prévus au sein de ce module de génération inverse (22).

Dans un exemple de réalisation relatif au deuxième mode de réalisation, les identifiants dynamiques de cellule radiofréquence (cell ID_d) ou les codes dynamiques de zone de localisation (LAC_d ou RAC_d) sont générés fréquemment (200) par l'autre module de masquage (21). Cette génération fréquente (200) peut être fonction d'un incrément connu et/ou d'une clé secrète afin d'assurer une génération inverse simple, effectuée par le module de génération inverse (22), des identifiants statiques de cellule (cell ID) ou des codes statiques de zone de localisation (LAC ou RAC) propres au système d'information de l'opérateur (9) à partir d'identifiants dynamiques de cellule (cell ID_d) ou codes dynamiques de zone de localisation (LAC_d ou RAC_d) par n'importe quel équipement du réseau radiofréquence ou de la plate-forme de l'opérateur ou plate-forme du partenaire de services géo localisés associés à l'opérateur (10).

On décrira ci-après le procédé de masquage des identifiants de cellules (cell ID) ou des codes de zone de localisation (LAC ou RAC) d'un réseau mobile vis-à-vis d'un terminal mobile (1) selon le premier mode de réalisation décrit précédemment.

Le procédé de masquage des identifiants statiques de cellules (cell ID) ou des codes statiques de zone de localisation (LAC ou RAC) comprend :
- une étape de génération (100) d'identifiants dynamiques de cellule (cell ID_d) ou de codes dynamiques de zone de localisation (LAC_d ou RAC_d), au moyen du module de masquage (11), intégré au BSC (3) pour un réseau GSM ou GPRS et au RNC (7) pour un réseau UMTS, vis-à-vis du terminal mobile (1) à partir d'identifiants statiques de cellule (cell ID) ou de codes statiques de zone de localisation (LAC ou RAC) afin de rendre impossible leur résolution en coordonnées géographiques par un quelconque acteur ou service externe autre que les services authentifiés par l'opérateur ; et
   dès qu'une information de signalisation transite sur le réseau considéré ;
- une étape de génération (101), au niveau du canal de signalisation, d'identifiants statiques de cellule (cell ID) ou de codes statiques de zone de localisation (LAC ou RAC), au moyen dudit module de masquage (11), vis-à-vis des autres équipements, c'est-à-dire les équipements autres que le terminal mobile (1), la BTS (2) et le BSC (3) ou le RNC (7), du réseau considéré à partir des identifiants dynamiques de cellule (cell ID_d) ou des codes dynamiques de zone de localisation (LAC_d ou RAC_d) de façon à assurer la translation de l'identifiant de cellule statique (cell ID) ou code de zone de localisation statique (LAC ou RAC) à destination de ces autres équipements du réseau considéré.

En outre, le procédé de masquage comprend, éventuellement, une étape de génération (102), au niveau du canal de données, des identifiants statiques de cellule (cell ID) ou des codes statiques de zone de localisation (LAC ou RAC), au moyen du module de génération inverse (12) intégré soit à l'OMC (8) ou au système d'information de l'opérateur (9) ou encore déporté sur la plate-forme de l'opérateur ou la plate-forme partenaire de services géo localisés (10) du réseau considéré, à partir des identifiants dynamiques de cellule (cell ID_d) ou des codes dynamiques de zone de localisation (LAC_d ou RAC_d), remontés à travers le réseau par le terminal mobile (1), de façon à accéder aux réponses du module de génération inverse (12) permettant d'estimer la position du terminal mobile (1) après résolution géographique.

On décrira ci-après le procédé de masquage des identifiants de cellules (cell ID) ou des codes de zone de localisation (LAC ou RAC) d'un réseau mobile vis-à-vis d'un terminal mobile (1) selon le deuxième mode de réalisation décrit précédemment.

Le procédé de masquage des identifiants de cellules (cell ID) ou des codes de zone de localisation (LAC ou RAC) comprend :
- une étape de génération (200) de tout ou partie d'identifiants dynamiques de cellule (cell ID_d) ou de codes dynamiques de zone de localisation (LAC_d ou RAC_d), au moyen de l'autre module de masquage (21) intégré à un équipement appartenant à l'architecture du réseau considéré proche de la plate-forme de l'opérateur ou de la plate-forme partenaire de services géolocalisés (10), vis-à-vis du terminal mobile (1) et des autres équipements du réseau considéré et notamment la plate-forme de l'opérateur ou la plateforme partenaire de services géolocalisés (10) mais autre que l'équipement dans lequel est intégré l'autre module de masquage (21), à partir d'identifiants statiques de cellule (cell ID) ou de codes statiques de zone de localisation (LAC ou RAC) propres au système d'information de l'opérateur (9) du réseau considéré afin de rendre impossible ou peu fiable leur résolution en coordonnées géographiques par un quelconque acteur ou service externe autre que les services authentifiés par l'opérateur ; et
- une étape de mise à jour (201), de façon globale ou partielle des autres équipements du réseau considéré et du système d'information de l'opérateur (9) au moyen dudit autre module de masquage (21).

En outre, le procédé de masquage comprend une étape de génération (202) d'identifiants statiques de cellule (cell ID) ou de codes statiques de zone de localisation (LAC ou RAC) propres au système d'information de l'operateur (9), au moyen d'un module de génération inverse (22), intégré dans le système d'information de l'opérateur (9) à partir des identifiants dynamiques de cellule (cell ID_d) ou des codes dynamiques de zone de localisation (LAC_d ou RAC_d) de façon à assurer la synchronisation ou le calcul au vol entre les identifiants statiques de cellule (cell ID) ou codes statiques de zone de localisation (LAC ou RAC) propres au système d'information de l'opérateur (9). De façon avantageuse, des services authentifiés par l'opérateur peuvent accéder aux réponses du module de génération inverse (22) permettant d'estimer la localisation du terminal mobile (1) après résolution géographique.

Un des avantages de l'invention est que le procédé de masquage des identifiants de cellules (cell ID) ou des codes de zones de localisation (LAC ou RAC) d'un réseau mobile vis-à-vis d'un terminal mobile (1) ou d'un terminal mobile (1) et d'autres équipements du réseau considéré permet d'assurer la protection de la vie privée des utilisateurs ou abonnés.

## Revendications

1. Procédé de masquage des identifiants statiques de cellule (cell ID) ou des codes statiques de zone de localisation (LAC ou RAC) d'un réseau mobile **caractérisé en ce qu'**il consiste à générer (100, 200), vis-à-vis d'un terminal mobile (1), tout ou partie d'identifiants dynamiques de cellule (cell ID_d) ou de codes dynamiques de zone de localisation (LAC_d ou RAC_d), au moyen d'un module de masquage (11, 21) intégré à un équipement appartenant à l'architecture du réseau considéré, à partir d'identifiants statiques de cellule (cell ID) ou de codes statiques de zone de localisation (LAC ou RAC) afin de rendre impossible ou peu fiable leur résolution en coordonnées géographiques par un quelconque acteur ou service externe autre que les services authentifiés par l'opérateur ; et
- soit à générer (101), au niveau du canal de signalisation, les identifiants statiques de cellule (cell ID) ou les codes statiques de zone de localisation (LAC ou RAC) à partir des identifiants dynamiques de cellule (cell ID_d) ou des codes dynamiques de zone de localisation (LAC_d ou RAC_d), remontés à travers le réseau par le terminal mobile (1) jusqu'au module de masquage (11), de façon à assurer la translation de l'identifiant de cellule statique (cell ID) ou code de zone de localisation statique (LAC ou RAC) à destination des autres équipements du réseau considéré, au moyen dudit module de masquage (11) ;
- soit à mettre à jour (201), de façon globale ou partielle les autres équipements du réseau considéré et le système d'information de l'opérateur (9) au moyen dudit module de masquage (21).

2. Procédé de masquage selon la revendication 1, **caractérisé en ce qu'**il consiste à générer (102, 202) les identifiants statiques de cellule (cell ID) ou les codes statiques de zone de localisation (LAC ou RAC), au moyen d'un module de génération inverse (12, 22) intégré dans un autre équipement du réseau considéré, proche de la plate-forme de l'opérateur ou de la plate-forme partenaire de services géolocalisés (10), à partir des identifiants dynamiques de cellule (cell ID_d) ou de codes dynamiques de zone de localisation (LAC_d ou RAC_d), remontés à travers le réseau par le terminal mobile (1) jusqu'au module de génération inverse (12, 22), afin de permettre à des services authentifiés par l'opérateur d'accéder aux réponses du module de génération inverse (12, 22) permettant d'estimer la localisation du terminal mobile (1) après résolution géographique.

3. Dispositif de masquage (11) d'identifiants statiques de cellule (cell ID) ou de codes statiques de zone de localisation (LAC ou RAC) permettant de mettre en oeuvre le procédé de masquage, selon une des revendications 1 à 2, **caractérisé en ce qu'**il comprend :
- soit un module de masquage (11) d'identifiants statiques de cellule (cell ID) ou de codes statiques de zone de localisation (LAC ou RAC), intégré à un contrôleur BSC (3) dans le cas d'un réseau de type GSM ou GPRS ou à un contrôleur RNC (7) dans le cas d'un réseau de type UMTS ;
- soit un autre module de masquage (21) de tout ou partie des identifiants statiques de cellule (cell ID) ou des codes statiques de zone de localisation (LAC ou RAC), intégré à un équipement du réseau considéré proche de la plate-forme de l'opérateur ou plate-forme partenaire de services géolocalisés (10).

4. Dispositif de masquage selon la revendication 3, **caractérisé en ce que** le module de masquage (11) est destiné à générer (100), vis-à-vis d'un terminal mobile (1), des identifiants dynamiques de cellule (cell ID_d) ou des codes dynamiques de zone de localisation (LAC_d ou RAC_d) à partir des identifiants statiques de cellule (cell ID) ou des codes statiques de zone de localisation (LAC ou RAC) et à transposer (101), au niveau du BSC (3) ou du RNC (7) du réseau considéré, les identifiants dynamiques de cellule (cell ID_d) ou les codes dynamiques de zone de localisation (LAC_d ou RAC_d) remontés par le terminal mobile (1) à travers une BTS (2) associée jusqu'au BSC (3) ou RNC (7), vis-à-vis des autres équipements du réseau considéré, au niveau du canal de signalisation, en identifiants statiques de cellule (cell ID) ou codes statiques de zone de localisation (LAC ou RAC).

5. Dispositif de masquage selon la revendication 3 ou 4, **caractérisé en ce que** le module de masquage (11) comprend des moyens algorithmiques basés sur des mécanismes réversibles mettant en oeuvre un ou plusieurs secret(s) de façon à assurer la génération (100) des identifiants dynamiques de cellule (cell ID_d) ou des codes dynamiques de zone de localisation (LAC_d ou RAC_d) et le transcodage (101) entre les identifiants dynamiques de cellule (cell ID_d) ou les codes dynamiques de zone de localisation (LAC_d ou RAC_d) et les identifiants statiques de cellule (cell ID) ou les codes statiques de zone de localisation (LAC ou RAC).

6. Dispositif de masquage selon une des revendications 3 à 5, **caractérisé en ce que** le module de masquage (11) est associé à un module de génération inverse (12) intégré à un centre d'exploitation et de maintenance OMC (8) ou à un système d'information de l'opérateur (9) ou déporté sur une plate-forme de l'opérateur ou une plate-forme partenaire de services géolocalisés (10) du réseau considéré pour générer (102) les identifiants statiques de cellule (cell ID) ou les codes statiques de zone de localisation (LAC ou RAC), au niveau du canal de données, à partir des identifiants dynamiques de cellule (cell ID_d) ou des codes dynamiques de zone de localisation (LAC_d ou RAC_d), remontés à travers le réseau considéré par le terminal mobile (1) jusqu'au module de génération inverse (12), pour autoriser leur résolution en coordonnées géographiques et localiser le terminal mobile (1).

7. Dispositif de masquage selon la revendication 6, **caractérisé en ce que** le module de génération inverse (12) comprend des moyens algorithmiques, similaires mais inverses aux moyens algorithmiques du module de masquage (11).

8. Dispositif de masquage selon la revendication 3, **caractérisé en ce que** l'autre module de masquage (21) est destiné à générer (200), vis-à-vis d'un terminal mobile (1) et des autres équipements du réseau considéré et notamment la plate-forme de l'opérateur ou la plateforme partenaire de services géolocalisés (10), des identifiants dynamiques de cellule (cell ID_d) ou des codes dynamiques de zone de localisation (LAC_d ou RAC_d) à partir d'identifiants statiques de cellule (cell ID) et de codes statiques de zone de localisation (LAC ou RAC) propres au système d'information de l'opérateur (9) de façon à ce que la résolution en coordonnées géographiques soit peu fiable voire impossible, cet autre module de masquage (21) étant également destiné à mettre à jour (201), de façon globale ou partielle, lesdits autres équipements du réseau considéré et du système d'information de l'opérateur (9).

9. Dispositif de masquage selon la revendication 8, **caractérisé en ce que** l'autre module de masquage (21) comprend des moyens algorithmiques non prédictifs ou basés sur un mécanisme mettant en oeuvre un ou plusieurs secrets pour générer (200) les identifiants dynamiques de cellule (cell ID_d) ou les codes dynamiques de zone de localisation (LAC_d ou RAC_d).

10. Dispositif de masquage selon la revendication 8 ou 9, **caractérisé en ce que** le module de masquage (11) est associé à un module de génération inverse (22) destiné à générer (202) des identifiants statiques de cellule (cell ID) ou des codes statiques de zone de localisation (LAC ou RAC) propres au système d'information de l'opérateur (9) à partir d'identifiants dynamiques de cellule (cell ID_d) ou codes dynamiques de zone de localisation (LAC_d ou RAC_d), remontés à travers le réseau par le terminal mobile (1) jusqu'au module de génération inverse (22), pour assurer la synchronisation ou le calcul au vol entre les identifiants statiques de cellule (cell ID) ou codes statiques de zone de localisation (LAC ou RAC) propres au système d'information de l'opérateur (9).

11. Dispositif de masquage selon la revendication 10, **caractérisé en ce que** le module de génération inverse (22) comprend des moyens algorithmiques, similaires mais inverses aux moyens algorithmiques de l'autre module de masquage (21).

## Claims

1. Method to mask static cell identifiers (cell ID) or static local area codes (LAC or RAC) of a mobile network **characterized in that**, with respect to a mobile terminal (1), it consists of generating (100, 200) all or part of dynamic cell identifiers (cell- ID_d) or of dynamic local area codes (LAC_d or RAC_d) by means of a masking module (11, 21) integrated in equipment belonging to the architecture of the network under consideration, on the basis of static cell identifiers (cell ID) or static local area codes (LAC or RAC), to make their resolution into geographical coordinates impossible, or scarcely reliable by any outside actor or service other than the services authenticated by the operator; and
- either of generating (101), at the signaling channel, the static cell identifiers (cell ID) or static local area codes (LAC or RAC) from the dynamic cell identifiers (cell ID_d) or from the dynamic local area codes (LAC_d or RAC_d) sent up through the network by the mobile terminal (1) as far as the masking module (11), so as to ensure translation of the static cell identifier (cell ID) or of the static local area code (LAC or RAC) towards the other equipment of the network under consideration, by means of said masking module (11);
- or of updating (201), globally or partially, the other equipment of the network under consideration and the operator's data system (9) by means of said masking module (21).

2. Masking method according to claim 1, **characterized in that** it consists of generating (102, 202) the static cell identifiers (cell ID) or static local area codes (LAC or RAC) by means of a reverse generating module (12, 22) integrated in another item of equipment of the network under consideration, close to the operator's platform or a partner platform for geolocalized services (10), from the dynamic cell identifiers (cell ID-d) or dynamic local area codes (LAC-d or RAC_d) sent up through the network by the mobile terminal (1) to the reverse generating module (12, 22) to enable services authenticated by the operator to access responses from the reverse generating module (12, 22) to allow the estimated location of the mobile terminal (1) after geographical resolution.

3. Masking device (11) to mask static cell identifiers (cell ID) or static local area codes (LAC or RAC) allowing implementation of the masking method according to either of claims 1 to 2, **characterized in that** it comprises:
- either a masking module (11) to mask static cell identifiers (cell ID) or static local area codes (LAC or RAC), that is integrated in a BSC controller (3) in the case of a network of GSM or GPRS, type, or in a RNC controller (7) in the case of a network of UMTS. type;
- or another masking module (21) to mask all or part of the static cell identifiers (cell ID) or static local area codes (LAC or RAC), integrated in an item of equipment of the network under consideration close to the operator's platform or partner platform for geolocalized services (10).

4. Masking device according to claim 3, **characterized in that** the masking module (11), with respect to a mobile terminal (1), is intended to generate (100) dynamic cell identifiers (cell ID_d) or dynamic local area codes (LAC_d or RAC_d) from the static cell identifiers (cell ID) or static local area codes (LAC or RAC) and, at the BSC (3) or RNC (7) of the network under consideration, to transpose (101) the dynamic cell identifiers (cell ID_d) or dynamic local area codes (LAC_d or RAC_d) sent up by the mobile terminal (1) through an associated BTS (2) as far as the BSC (3) or RNC (7), into static cell identifiers (cell ID) or static local area codes (LAC or RAC).with respect to the other equipment in the network under consideration and at the signaling channel.

5. Masking device according to claim 3 or 4, **characterized in that** the masking module (11) comprises algorithmic means based on reversible mechanisms using one or more secrets to ensure the generating (100) of dynamic cell identifiers (cell ID_d) or dynamic local area codes (LAC_d or RAC_d) and transcoding (101) between the dynamic cell identifiers (cell ID_d) or dynamic local area codes (LAC_d) or RAC_d) and the static cell identifiers (cell ID) or static local area codes (LAC or RAC),

6. Masking device according to any of claims 3 to 5, **characterized in that** the masking module (11) is associated with a reverse generating module (12) either integrated in an operating and maintenance centre OMC (8) or an operator data system (9) or contained on a platform of the operator or partner platform for geolocalized services (10) of the network under consideration, to generate (102) the static cell identifiers (cell ID) or static local area codes (LAC or RAC) at the data channel, from the dynamic cell identifiers (cell ID_d) or dynamic local area codes (LAC_d or RAC_d) sent up through the network under consideration by the mobile terminal (1) as far as the reverse generating module (12) to authorize their resolution into geographical coordinates and to locate the mobile terminal (1).

7. Masking device according to claim 6, **characterized in that** the reverse generating module (12) comprises algorithmic means, similar to but the reverse of the algorithmic means of the masking module (11).

8. Masking device according to claim 3, **characterized in that** the other masking module (21), with respect to a mobile terminal (1) and other equipment in the network under consideration notably the operator's platform or partner platform for geolocalized services (10), is intended to generate (200) dynamic cell identifiers (cell ID_d) or dynamic local area codes (LAC_d_ or RAC_d) from static cell identifiers (cell ID) and from static local area codes (LAC or RAC) particular to the operator's data system (9) so that the resolution into geographical coordinates is scarcely reliable even impossibly, this other masking module (21) also being intended, globally or partially, to update (201) said other equipment of the network under consideration and of the operator's data system (9).

9. Masking device according to claim 8, **characterized in that** the other masking module (21) comprises algorithmic means that are non-predictive or based on a mechanism using one or more secrets to generate (200) the dynamic cell identifiers (cell ID_d) or dynamic local area codes (LAC_d or RAC_d).

10. Masking device according to claim 8 or 9, **characterized in that** the masking module (11) is associated with a reverse generating module (22) intended to generate (202) static cell identifiers (cell ID) or static local area codes (LAC or RAC) particular to the operator's data system (9) from dynamic cell identifiers (cell ID_d) or dynamic local area codes (LAC_d or RAC_d) sent up through the Network by the mobile terminal (1) as far as the reverse generating module (22), to ensure synchronization or on-the-fly calculation between the static cell identifiers (cell ID) or static local area codes (LAC or RAC) particular to the operator's data system (9).

11. Masking device according to claim 10, **characterized in that** the reverse generating module (22) comprises algorithmic means similar to but the reverse of the algorithmic means of the other masking module (21).

## Patentansprüche

1. Verfahren zum Maskieren der statischen Zellenkennungen (cell ID) oder der statischen Lokalisierungszonencodes (LAG oder RAC) eines Mobilnetzwerks, **dadurch gekennzeichnet, dass** es darin besteht, gegenüber einem mobilen Endgerät (1) alle oder einen Teil der dynamischen Zellenkennungen (cell ID_d) oder der dynamischen Lokalisierungszonencodes (LAC_d oder RAC_d) mittels eines Maskierungsmoduls (11, 21), das in eine Einrichtung integriert ist, die zu der Architektur des betreffenden Netzwerks gehört, ausgehend von statischen Zellenkennungen (cell ID) oder statischen Lokalisierungszonencodes (LAC oder RAC) zu erzeugen (100, 200), um ihre Auflösung in geografische Koordinaten durch einen beliebigen externen Akteur oder Dienst, der nicht zu den von dem Betreiber authentifizierten Diensten gehört, unmöglich oder unzuverlässig zu machen; und
- entweder auf Kanalsignalisierungsebene die statischen Zellenkennungen (cell ID) oder die statischen Lokalisierungszonencodes (LAC oder RAC) aus den dynamischen Zellenkennungen (cell ID_d) oder den dynamischen Lokalisierungszonencodes (LAC_d oder RAC_d), die über das Netzwerk durch das mobile Endgerät (1) bis zum Maskierungsmodul (11) zurückgebracht werden, zu erzeugen (101), um die Übersetzung der statischen Zellenkennung (cell ID) oder des statischen Lokalisierungszonencodes (LAC oder RAC) für die anderen Einrichtungen des betreffenden Netzwerks mittels des Maskierungsmoduls (11) sicherzustellen;
- oder die anderen Einrichtungen des betreffenden Netzwerks und das Informationssystem des Betreibers (9) mittels des Maskierungsmoduls (21) insgesamt oder teilweile zu aktualisieren (201).

2. Maskierungsverfahren nach Anspruch 1, **dadurch gekennzeichnet, dass** es darin besteht, die statischen Zellenkennungen (cell ID) oder die statischen Lokalisierungszonencodes (LAC oder RAC) mittels eines umgekehrten Erzeugungsmoduls (12, 22), das in einer anderen Einrichtung des betreffenden Netzwerks integriert ist, in der Nähe der Plattform des Betreibers oder der Partnerplattform für geolokalisierte Diensten (10), aus den dynamischen Zellenkennungen (cell ID_d) oder dynamischen Lokalisierungszonencodes (LAC_d oder RAC_d), die über das Netzwerk durch das mobile Endgerät (1) bis zum umgekehrten Erzeugungsmodul (12, 22) zurückgebracht werden, zu erzeugen (102, 202), um es vom Betreiber authentifizierten Diensten zu ermöglichen, auf die Antworten des umgekehrten Erzeugungsmoduls (12, 22) zuzugreifen, wodurch es möglich ist, die Lokalisierung des mobilen Endgeräts (1) nach geografischer Auflösung zu schützen.

3. Vorrichtung zum Maskieren (11) statischer Zellenkennungen (cell ID) oder statischer Lokalisierungszonencodes (LAC oder RAC), die es ermöglicht, das Maskierungsverfahren nach einem der Ansprüche 1 bis 2 durchzuführen, **dadurch gekennzeichnet, dass** sie folgendes umfasst,
- entweder ein Modul (11) zum Maskieren statischer Zellenkennungen (cell ID) oder statischer Lokalisierungszonencodes (LAC oder RAC), das bei einem GSM- oder GPRS-artigen Netzwerk in einer Steuerung BSC (3) oder bei einem UMTS-artigen Netzwerk in einer Steuerung RNC (7) integriert ist;
- oder ein anderes Modul (21) zum Maskieren aller oder eines Teils der statischen Zellenkennungen (cell ID) oder statischen Lokalisierungszonencodes (LAC oder RAC), das in eine Einrichtung des betreffenden Netzwerks in der Nähe der Plattform des Betreibers oder der Partnerplattform geolokalisierter Dienste (10) integriert ist.

4. Maskierungsvorrichtung nach Anspruch 3, **dadurch gekennzeichnet, dass** das Maskierungsmodul (11) dazu gedacht ist, gegenüber einem mobilen Endgerät (1) dynamische Zellenkennungen (cell ID_d) oder dynamische Lokalisierungszonencodes (LAC_d oder RAC_d) aus den statischen Zellenkennungen (cell ID) oder den statischen Lokalisierungszonencodes (LAC oder RAC) zu erzeugen (100) und auf der Ebene der BSC (3) oder der RNC (7) des betreffenden Netzwerks die dynamischen Zellenkennungen (cell ID_d) oder die dynamischen Lokalisierungszonencodes (LAC_d oder RAC_d), die durch das mobile Endgerät (1) über eine verknüpft BTS (2) bis zur BSC (3) oder RNC (7) zurückgebracht werden, gegenüber den anderen Einrichtungen des betreffenden Netzwerk, auf Kanalsignalisierungsebene in statische Zellenkennungen (cell ID) oder statische Lokalisierungszonencodes (LAC oder RAC) umzusetzen (101).

5. Maskierungsvorrichtung nach Anspruch 3 oder 4, **dadurch gekennzeichnet, dass** das Maskierungsmodul (11) algorithmische Mittel umfasst, die auf umkehrbaren Mechanismen basieren, die eine oder mehrere geheime Informationen einsetzen, um die Erzeugung (100) der dynamischen Zellenkennungen (cell ID_d) oder der dynamischen Lokalisierungszonencodes (LAC_d oder RAC_d) und die Umsetzung (101) zwischen den dynamischen Zellenkennungen (cell ID_d) oder den dynamischen Lokalisierungszonencodes (LAC_d oder RAC_d) und den statischen Zellenkennungen (cell ID) oder den statischen Lokalisierungszonencodes (LAC oder RAC) sicherzustellen.

6. Maskierungsvorrichtung nach einem der Ansprüche 3 bis 5, **dadurch gekennzeichnet, dass** das Maskierungsmodul (11) mit einem umgekehrten Erzeugungsmodul (12) verknüpft ist, das in eine Betriebs- und Wartungszentrale OMC (8) oder in ein Informationssystem des Betreibers (9) integriert ist oder auf eine Plattform des Betreibers oder eine Partnerplattform für geolokalisierte Dienste (10) des betreffenden Netzwerks ausgelagert ist, um die statischen Zellenkennungen (cell ID) oder die statischen Lokalisierungszonencodes (LAC oder RAC) auf Datenkanalebene aus den dynamischen Zellenkennungen (cell ID_d) oder den dynamischen Lokalisierungszonencodes (LAC_d oder RAC_d), die über das betreffende Netzwerk durch das mobile Endgerät (1) bis zum umgekehrten Erzeugungsmodul (12) zurückgebracht werden, zu erzeugen (102), um ihre Auflösung in geografische Koordinaten zu genehmigen und das mobile Endgerät (1) zu lokalisierten.

7. Maskierungsvorrichtung nach Anspruch 6, **dadurch gekennzeichnet, dass** das umgekehrte Erzeugungsmodul (12) algorithmische Mittel umfasst, die ähnlich wie die algorithmischen Mittel des Maskierungsmoduls (11) sind, jedoch umgekehrt.

8. Maskierungsvorrichtung nach Anspruch 3, **dadurch gekennzeichnet, dass** das andere Maskierungsmodul (21) dazu gedacht ist, gegenüber einem mobilen Endgerät (1) und den anderen Einrichtungen des betreffenden Netzwerks, und insbesondere der Plattform des Betreibers oder der Partnerplattform für geolokalisierte Dienste (10), dynamische Zellenkennungen (cell ID_d) oder dynamische Lokalisierungszonencodes (LAC_d oder RAC_d) aus statischen Zellenkennungen (cell ID) und statischen Lokalisierungszonencodes (LAC oder RAC), die dem Informationssystem des Betreibers (9) eigen sind, zu erzeugen (200), damit die Auflösung in geografische Koordinaten unzuverlässig oder sogar unmöglich ist, wobei dieses andere Maskierungsmodul (21) ebenfalls dazu gedacht ist, die anderen Einrichtungen des betreffenden Netzwerks und des Informationssystems des Betreibers (9) insgesamt oder teilweise zu aktualisieren (201).

9. Maskierungsvorrichtung nach Anspruch 8, **dadurch gekennzeichnet, dass** das andere Maskierungsmodul (21) algorithmische Mittel umfasst, die nicht prädiktiv sind oder auf einem Mechanismus basieren, der ein oder mehrere geheime Informationen verwender, um die dynamischen Zellenkennungen (cell ID_d) oder die dynamischen Lokalisierungszonencodes (LAC_d oder RAC_d) zu erzeugen (200).

10. Maskierungsvorrichtung nach Anspruch 8 oder 9, **dadurch gekennzeichnet, dass** das Maskierungsmodul (11) mit einem umgekehrten Erzeugungsmodul (22) verknüpft ist, das dazu gedacht ist, statische Zellenkennungen (cell ID) oder statische Lokalisierungszonencodes (LAC oder RAC), die dem Informationssystem des Betreibers (9) eigen sind, aus dynamischen Zellenkennungen (cell ID_d) oder dynamischen Lokalisierungszonencodes (LAC_d oder RAC_d), die über das Netzwerk durch das mobile Endgerät (1) bis zum umgekehrten Erzeugungsmodul (22) zurückgebracht werden, zu erzeugen (202), um die spontane Synchronisierung oder Berechnung zwischen den statischen Zellenkennungen (cell ID) oder den statischen Lokalisierungszonencodes (LAC oder RAC) sicherzustellen, die dem Informationssystem des Betreibers (9) eigen sind.

11. Maskierungsvorrichtung nach Anspruch 10, **dadurch gekennzeichnet, dass** das umgekehrte Erzeugungsmodul (22) algorithmische Mittel umfasst, die ähnlich wie die algorithmischen Mittel des anderen Maskierungsmoduls (21) sind, jedoch umgekehrt.
